# EUROPÄISCHE PATENTANMELDUNG

(11) **EP 2 254 224 A1**
(43) Veröffentlichungstag der Anmeldung: **24.11.2010**
(21) Anmeldenummer: 09160516.2
(22) Anmeldetag: 18.05.2009
(51) Int. Cl.: H02M 1/12, H02H 7/00

(54) **Verfahren zum Entladen einer Entstörkapazität am Ausgang einer Wechselrichtereinrichtung und Wechselrichtereinrichtung**

(71) Anmelder: SMA Solar Technology AG, 34266 Niestetal (DE)
(72) Erfinder: Künzel, Benedikt, 37308 Geisleden (DE); Ewig, Carsten, 34117 Kassel (DE); Wolf,, Henrik, 34123 Kassel (DE); Bremicker, Sven, 36211 Alheim (DE)
(74) Vertreter: Rehberg Hüppe + Partner

(57) **Zusammenfassung**

Zum Entladen einer Entstörkapazität (7) am Ausgang einer Wechselrichtereinrichtung 1 für die Einspeisung elektrischer Energie von einer Stromquelle in ein Wechselstromnetz, bei der ein Netzteil (14) aus einer seitens des Wechselstromnetzes am Ausgang der Wechseleinrichtereinrichtung (1) anliegenden Spannung gespeist wird, wird die über der Entstörkapazität (7) anliegende Spannung gleichgerichtet, um einen Gleichspannungszwischenkreis (13) des Netzteils (14) zu laden.

## Beschreibung

### TECHNISCHES GEBIET DER ERFINDUNG

Die Erfindung bezieht sich auf ein Verfahren zum Entladen einer Entstörkapazität am Ausgang einer Wechselrichtereinrichtung für die Einspeisung elektrischer Energie von einer Stromquelle in ein Wechselstromnetz mit den Schritten des Oberbegriffs des unabhängigen Patentanspruchs 1 sowie auf eine derartige Wechselrichtereinrichtung mit den Merkmalen des Oberbegriffs des unabhängigen Patentanspruchs 6.

### STAND DER TECHNIK

Jede Wechselrichtereinrichtung für die Einspeisung elektrischer Energie von einer Stromquelle in ein Wechselstromnetz, insbesondere wenn diese dreiphasig ausgebildet ist, benötigt zur Entstörung auf der Netzanschlussseite ein Entstörfilter, um die normativen Vorgaben zur elektromagnetischen Verträglichkeit (EMV) einhalten zu können. Ein solches Entstörfilter wird auch als EMV-Filter bezeichnet. Der Aufbau eines EMV-Filters umfasst typischerweise eine Kombination von X- und Y-Kondensatoren als Entstörkapazitäten, die am Ausgang der Wechselrichtereinrichtung zwischen die Leiter sowie zur Erde hin geschaltet sind. Da die X-Kondensatoren für jede Phase einzeln ausgeführt sein müssen, erhöht sich die Summe der X-Kapazität bei einer dreiphasigen Wechselrichtereinrichtung gegenüber einer einphasigen Wechselrichtereinrichtung um einen Faktor von drei. Normativ ist weiterhin gefordert, dass beim Trennen einer Wechselrichtereinrichtung von einem Wechselstromnetz die in den Entstörkapazitäten gespeicherte Ladung binnen einer bestimmten Zeit unter einen für Menschen gefährlichen Wert abgesunken sein müssen. Um diese Anforderung zu erfüllen, werden den X-Kondensatoren am Ausgang der Wechselrichtereinrichtung üblicherweise Entladungswiderstände parallelgeschaltet, über die sich nach einer Trennung der Wechselrichtereinrichtung vom Wechselstromnetz sowohl die X- als auch die Y-Kondensatoren in der geforderten Zeit entladen. Die in den Entstörkapazitäten gespeicherte elektrische Energie wird dabei in Wärme umgesetzt. Diese Umsetzung in Wärme erfolgt auch laufend während des Betriebs der Wechselrichtereinrichtung, solange Spannung über den X-Kondensatoren anliegt. Ein Leistungsverlust tritt also auch dann auf, wenn die Wechselrichtereinrichtung keine elektrische Energie in das Wechselstromnetz einspeist. Zudem wächst der Leistungsverlust mit der Summe der Entstörkapazitäten am Ausgang der Wechselrichtereinrichtung an, da über die Entladungswiderstände gerade so viel Strom fließen muss, dass alle Entstörkapazitäten binnen der vorgegebenen Zeit ausreichend weit entladen wird.

Insbesondere bei Wechselrichtereinrichtungen, die elektrische Energie von einer nicht dauerhaft zur Verfügung stehenden Stromquelle, wie beispielsweise einer Photovoltaikanlage in ein Wechselstromnetz einspeisen, ist es bekannt, zumindest einen Teil der Steuerung und/oder von Kommunikationsanlagen der Wechselrichtereinrichtung nicht von der Stromquelle sondern von dem Wechselstromnetz aus mit elektrischer Energie zu versorgen. Die elektrische Versorgung über das Wechselstromnetz kann gegenüber einer elektrischen Versorgung aus der Stromquelle auch als Alternative vorgesehen sein. Bei einer bekannten Wechselrichtereinrichtung ist für die elektrischen Versorgung über das Wechselstromnetz ein Netzteil vorgesehen, das aus einer seitens des Wechselstromnetzes am Ausgang der Wechselrichtereinrichtung anliegenden Spannung gespeist wird, wobei diese Spannung auch über einer Entstörkapazität am Ausgang der Wechselrichtereinrichtung anliegt, der ein Entladewiderstand parallelgeschaltet ist. Diese bekannte Wechselrichtereinrichtung weist die Merkmale des Oberbegriffs des unabhängigen Patentanspruchs 6 auf. Zu ihrem üblichen Betrieb gehört ein Verfahren zum Entladen ihrer Störkapazitäten mittels parallelgeschalteter Entladungswiderstände nach dem Oberbegriff des unabhängigen Patentanspruchs 1.

### AUFGABE DER ERFINDUNG

Der Erfindung liegt die Aufgabe zugrunde, ein Verfahren mit den Schritten des Oberbegriffs des unabhängigen Patentanspruchs 1 und eine Wechselrichtereinrichtung mit den Merkmalen des Oberbegriffs des unabhängigen Patentanspruchs 6 aufzuzeigen, bei denen trotz einer ausreichend schnellen Entladung der Entstörkapazitäten am Ausgang der Wechselrichtereinrichtung eine andauernde Umwandlung von elektrischer Energie durch Entladungswiderstände in Wärme vermieden wird.

### LÖSUNG

Erfindungsgemäß wird diese Aufgabe durch ein Verfahren mit den Schritten des unabhängigen Patentanspruchs 1 und eine Wechselrichtereinrichtung mit den Merkmalen des unabhängigen Patentanspruchs 6 gelöst. Bevorzugte Ausführungsformen des neuen Verfahrens und der neuen Wechselrichtereinrichtung sind in den abhängigen Patentansprüchen definiert.

### BESCHREIBUNG DER ERFINDUNG

Bei dem neuen Verfahren zum Entladen einer Entstörkapazität am Ausgang einer Wechselrichtereinrichtung für die Einspeisung elektrischer Energie von einer Stromquelle in ein Wechselstromnetz wird die über der Entstörkapazität anliegende Spannung gleichgerichtet, um einen Gleichspannungszwischenkreis des Netzteils zu laden, das sowieso seitens des Wechselstromnetzes gespeist werden soll. So tritt auch bei dem erfindungsgemäßen Verfahren ein kontinuierlicher Fluss elektrischer Energie in Entladungsrichtung der Entstörkapazität auf, der im Falle des Trennens der Wechselrichtereinrichtung vom Wechselstromnetz die Entladung der Entstörkapazität binnen bestimmter Zeit sicherstellt. Dieser Fluss elektrischer Energie wird jedoch nicht in Wärme umgesetzt, sondern zum Speisen des Netzteils der Wechselrichtereinrichtung verwendet, das netzseitig angeschlossen ist. In welche Richtung die jeweilige Entstörkapazität aufgeladen ist, hängt von der aktuellen Phasenlage des Netzes ab, die beim Abhängen der Wechselrichtereinrichtung von dem Wechselstromnetz konserviert wird. Obwohl das Netzteil bei dem erfindungsgemäßen Verfahren einen Gleichspannungszwischenkreis aufweist, spielt die aktuelle Richtung der Aufladung der Entstörkapazität aufgrund der Gleichrichtung in den Gleichspannungszwischenkreis keine Rolle. Indem sich das Netzteil aus dem Gleichspannungszwischenkreis versorgt, reduziert es die Spannung in dem Gleichspannungszwischenkreis, wobei dieser, wenn die Wechselrichtereinrichtung vom Wechselstromnetz getrennt ist, von der Entstörkapazität nachgeladen wird, was zu dem gewünschten Entladen der Entstörkapazität binnen ausreichend kurzer Zeit führt.

Um die Gleichrichtung der Spannung über der Entstörkapazität in den Gleichspannungszwischenkreis zu bewerkstelligen, kann jede Seite der Entstörkapazität über zwei Gleichrichterdioden mit den beiden Polen des Gleichspannungszwischenkreises verbunden werden. Bei von dem Wechselstromnetz abgehängter Entstörkapazität erfolgt der tatsächliche Ladungsfluss von jeder Seite der Entstörkapazität über jeweils eine dieser beiden Gleichrichterdioden in den Gleichspannungszwischenkreis. Dabei wird die jeweilige Diode durch die Richtung der Ladung der Entstörkapazität festgelegt.

Vorzugsweise werden zum Entladen aller Entstörkapazitäten am Ausgang der Wechselrichtereinrichtung zu einem mehrphasigen Wechselstromnetz jede Phase und der Nullleiter über je zwei Gleichrichterdioden mit den beiden Polen des Gleichspannungszwischenkreises verbunden. Diese Verschaltung hat den Vorteil, dass sie völlig unabhängig davon ist, welche beiden Dioden jeweils mit welcher Phase bzw. dem Nullleiter verbunden werden, da der Aufbau der Schaltung für alle Phasen und den Nullleiter gleich ist. Durch die Verbindungen jeder Phase und des Nulleiters mit dem Gleichspannungszwischenkreis werden die beiden Seiten aller X-Kapazitäten mit dem Gleichspannungszwischenkreis verbunden. Aber auch alle Y-Kapazitäten können sich dadurch in den Gleichspannungszwischenkreis entladen.

Für die Bereitstellung von jeweils zwei Paare von Gleichrichterdioden kann in kostengünstiger Weise auf eine konfektionierte Gleichrichtervollbrücke zurückgegriffen werden.

Bevorzugt ist bei dem neuen Verfahren die Verwendung eines Netzteils, das bis zu einer weit abgesunkenen Spannung in seinem Gleichspannungszwischenkreis funktionsfähig bleibt und so die Entstörkapazitäten möglichst weitgehend entladen kann. Geeignet ist dafür insbesondere ein solches Netzwerk, das den Gleichspannungszwischenkreis über einen getakteten Schalter entlädt. Derartige Netzteile werden auch als Schaltnetzteile bezeichnet.

In dem Gleichspannungszwischenkreis kann zusätzlich eine Pufferkapazität vorgesehen sein. Er kann auch einen Restentladungswiderstand aufweisen, über den dann aber insgesamt sowohl im normalen Betrieb als auch nach Trennung der Wechselrichtereinrichtung von dem Wechselstromnetz deutlich weniger Strom fließt als bei den Entstörkapazitäten direkt parallelegeschalteten Entladungswiderständen. Die Pufferkapazität und der Restentladungswiderstand können auch symmetrisch geteilt und ihre Mittelpunkte miteinander verbunden sein. Zusätzlich können diese Mittelpunkte auch geerdet sein. Es gibt bezüglich des Gleichspannungszwischenkreises noch weitere Schaltungsvarianten, die dem Fachmann grundsätzlich bekannt sind und auch hier zur Anwendung kommen können. Für alle neuen Wechselrichtereinrichtungen gilt jedoch, dass mindestens einer X-Kapazität am Ausgang zum Wechselstromnetz kein ohmscher Entladungswiderstand parallelgeschaltet ist, weil die Entladung dieser Entstörkapazität aktiv über das Netzteil erfolgt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt die erfindungsgemäße Wechselrichtereinrichtung in einer ersten dreiphasi- gen Ausführungsform.
- **Fig. 2**: zeigt die erfindungsgemäße Wechselrichtereinrichtung in einer zweiten dreiphasi- gen Ausführungsform und
- **Fig. 3**: zeigt die erfindungsgemäße Wechselrichtereinrichtung in einer dritten dreiphasi- gen Ausführungsform.

### FIGURENBESCHREIBUNG

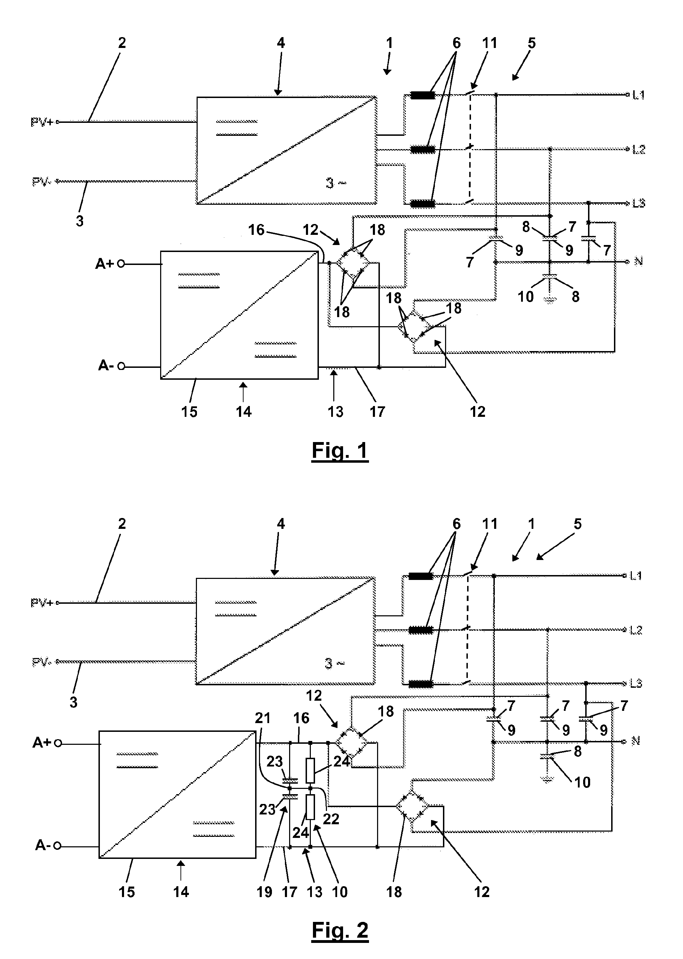

Die in **Fig. 1** skizzierte Wechselrichtereinrichtung 1 dient zum Einspeisen von elektrischer Energie von einer Stromquelle, die hier nur durch die für ein Photovoltaikpaneel stehenden Bezeichnungen PV+ und PV- von Anschlüssen von Eingangsleitungen 2 und 3 angedeutet ist, in ein dreiphasiges Wechselstromnetz. Eine zwischen den Eingangsleitungen 2 und 3 anliegende Eingangsgleichspannung wird von einem Wechselrichter 4 in eine dreiphasige Ausgangswechselspannung umgerichtet, die gegenüber einem Nulleiter N an jeweils einer Phase des Wechselstromnetzes entsprechenden Leitungen L1, L2 und L3 anliegen. Um beim Einspeisen elektrischer Energie in das Wechselstromnetz Vorgaben zur elektromagnetischen Verträglichkeit zu erfüllen, weist die Wechselrichtereinrichtung 1 ein netzseitiges EMV-Filter 5 auf, das Entstörinduktivitäten 6 sowie Entstörkapazitäten 7 und 8 umfasst. Jede der Entstörinduktivitäten 6 ist in einem der jeweils einer Phase zugeordneten Leiter L1 bis L3 vorgesehen. Die Entstörkapazitäten 7 sind als X-Kondensatoren 9 jeweils zwischen den Leitern L1 bis L3 und den Nullleiter N geschaltet, wobei sie auch zwischen den Leitungen L1 bis L3 wirksam sind. Die Entstörkapazität 8 ist als Y-Kondensator 10 gegenüber Erde vorgesehen. Zwischen den Entstörinduktivitäten 6 und den Entstörkapazitäten 7 und 8 ist ein Netzschalter 11 angeordnet, der den Wechselrichter 4 dem jeweiligen Wechselstromnetz zuschaltet. Bereits vor diesem Zuschalten und damit solange, wie die Wechselrichtereinrichtung 1 über die Leitungen L1 bis L3 und N an dem Wechselstromnetz hängt, liegt die Netzspannung über den Entstörkapazitäten 7 an. Die Netzspannung, grundsätzlich eine Wechselspannung, wird über zwei Gleichrichtervollbrücken 12 einem Gleichspannungszwischenkreis 13 eines Netzteils 14 zugeführt. Das Netzteil 14 ist grundsätzlich ein DC-/DC-Wandler 15, der eine zwischen den Leitungen 16 und 17 des Zwischenkreises 13 anliegende, Schwankungen unterworfene Zwischenkreisgleichspannung in eine konstante Ausgangsgleichspannung zwischen seinen Ausgängen A+ und A- umwandelt. Über die Ausgänge A+ und A- kann die gesamte Steuerung der Wechselrichtereinrichtung 1 mit elektrischer Energie versorgt werden. Sie ist dann unabhängig von einer zwischen den Eingangsleitungen 2 und 3 anliegenden Eingangsgleichspannung betriebsbereit. Die Gleichrichtervollbrücken 12 weisen jeweils vier Gleichrichterdioden 18 auf, von denen jeweils zwei eine Seite einer Entstörkapazität 7 mit den beiden Eingangsleitungen 16 und 17 des Zwischenkreises 13 verbinden. Da alle Entstörkapazitäten 7 hier gegenüber dem Nullleiter N vorgesehen sind, so dass zum Verbinden der Nulleiter-Seiten aller drei Entstörkapazitäten 7 ein einziger solcher Anschluss ausreicht, kommt man mit den insgesamt acht Gleichrichterdioden 18 der beiden Gleichrichtervollbrücken 12 aus. Allein für das Aufladen des Gleichspannungszwischenkreises 13 wäre es ausreichend, nur die über einer Entstörkapazität 7 abfallende Spannung gleichzurichten, auch wenn dann die Versorgung des Netzteils 14 mit elektrischer Energie nur zu Lasten der entsprechenden Phase ginge, d. h. eine gewisse Schieflast hervorgerufen würde. Hier sorgt die Gleichrichtung der über allen drei Entstörkapazitäten 7 anfallenden Spannungen zur Aufladung des Zwischenkreises 13 aber zusätzlich für eine Entladung dieser Entstörkapazitäten 7, wenn die Wechselrichtereinrichtung 1 von dem Wechselstromnetz getrennt wird. Unter dieser Trennung ist nicht das Öffnen des Netzschalters 11 zu verstehen, sondern das Trennen der Leitungen L1 bis L3 und N von dem Wechselstromnetz. In diesem Fall ist die normative Anforderung zu erfüllen, dass sich die Entstörkapazitäten 7 und auch die Entstörkapazität 8 binnen definierter Zeit entladen, damit auf ihnen verbleibende Restladungen keine dauerhafte Gefahrenquelle darstellen. Durch die in Fig. 1 gezeigte Schaltung der Wechselrichtereinrichtung 1 entladen sich alle Entstörkapazitäten 7 und über den Anschluss des Nullleiters N an die Gleichrichtervollbrücke 12 auch die Entstörkapazität 8 sukzessive in den Gleichspannungszwischenkreis 13, sowie das Netzteil 14 hieraus elektrische Energie entnimmt. Bei ausreichendem Grundverbrauch des Netzteils 14 können die üblichen Vorschriften für die Entladung von Entstörkapazitäten 7 und 8 am Ausgang einer Wechselrichtereinrichtung problemlos eingehalten werden, ohne dass den Entstörkapazitäten 7 zu diesem Zweck Entladungswiderstände parallelgeschaltet sind. Der mit solchen, den Entstörkapazitäten 7 dauerhaft parallelgeschalteten Entladungswiderständen verbundene Leistungsverlust tritt hier nicht auf. Zwar wird hier auch immer, d. h. nicht nur dann, wenn die Entstörkapazitäten 7 und 8 entladen werden sollen, Leistung in Entladungsrichtung der Entstörkapazitäten abgezogen. Hierbei handelt es sich aber um Nutzleistung, mit der das Netzwerk 14 die Steuerung der Gleichrichtereinrichtung 1 versorgt.

In **Fig. 2** ist eine Ausführungsform der Wechselrichtereinrichtung gezeigt, die zusätzlich zu derjenigen gemäß Fig. 1 eine geteilte Pufferkapazität 19 und einen geteilten Restentladungswiderstand 20 in dem Gleichspannungszwischenkreis 13 aufweist. Die Mittelpunkte 21 und 22 zwischen den beiden Teilkapazitäten 23 der Pufferkapazität 19 und den beiden Teilwiderständen 24 des Restentladungswiderstands 20 sind miteinander verbunden und können zusätzlich geerdet sein, was hier nicht zeichnerisch dargestellt ist. Auch weitere, dem Fachmann ansich bekannte Ausgestaltungen des Gleichspannungszwischenkreises 13 können hier Anwendung finden. Ein über den Restentladungswiderstand 20 fließender Strom bleibt hier vergleichsweise klein und ist mit keiner Verlustleistung verbunden, wie sie bei üblichen, einzelnen X-Kondensatoren 9 parallelgeschalteten Entladungswiderständen zwangsweise auftritt.

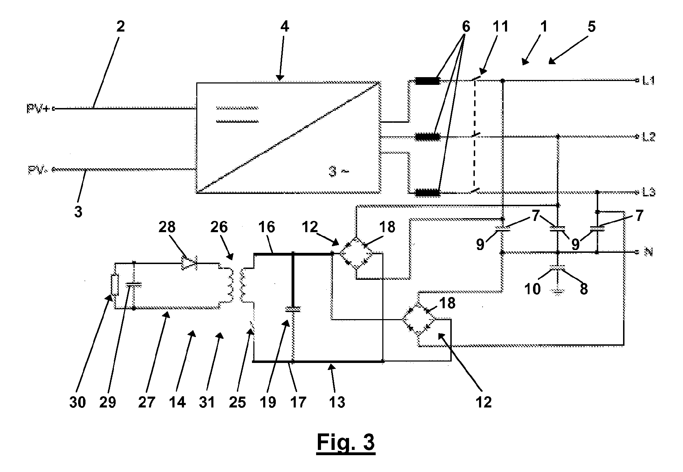

**Fig. 3** skizziert die Ausgestaltung des Netzteils 14 als Schaltnetzteil 31 mit einem Schalter 25 und einem Transformator 26 in dessen Ausgangskreis 27 eine Gleichrichterdiode 28 und eine Pufferkapazität 29 vorgesehen sind. Die durch das Schaltnetzteil 31 versorgte Steuerung der Wechselrichtereinrichtung 1 ist durch einen Widerstand 30 angedeutet. Im Übrigen ist hier in dem Gleichspannungszwischenkreis 13 eine ungeteilte Pufferkapazität 19 vorgesehen. Die Ausbildung des Netzteils 14 als Schaltnetzteil 31 stellt eine Möglichkeit dar, den Gleichspannungszwischenkreis 13 mit abfallender Spannung über den Entstörkapazitäten 7 immer weiter zu entladen, ohne dass dabei die Energieversorgung über das Netzteil 14 beeinträchtigt wird, um so die auf den Entstörkapazitäten 7 verbleibenden Restladungen immer weiter abzusenken, wobei diese Restladungen über die Gleichrichtervollbrücken 12 bzw. deren Gleichrichterdioden 18 in den Gleichspannungszwischenkreis 13 abfließen.

### BEZUGSZEICHENLISTE

| | | | |
|---|---|---|---|
| 1 | Wechselrichtereinrichtung | 31 | Schaltnetzteil |
| 2 | Eingangsleitung | | |
| 3 | Eingangsleitung | | |
| 4 | Wechselrichter | | |
| 5 | EMV-Filter | | |
| 6 | Entstörinduktivität | | |
| 7 | Entstörkapazität | | |
| 8 | Entstörkapazität | | |
| 9 | X-Kondensator | | |
| 10 | Y-Kondensator | | |
| 11 | Netzschalter | | |
| 12 | Gleichrichtervollbrücke | | |
| 13 | Gleichspannungszwischenkreis | | |
| 14 | Netzteil | | |
| 15 | DC/DC-Wandler | | |
| 16 | Leitung | | |
| 17 | Leitung | | |
| 18 | Gleichrichterdiode | | |
| 19 | Pufferkapazität | | |
| 20 | Restentladungswiderstand | | |
| 21 | Mittelpunkt | | |
| 22 | Mittelpunkt | | |
| 23 | Teilkapazität | | |
| 24 | Teilwiderstand | | |
| 25 | Schalter | | |
| 26 | Transformator | | |
| 27 | Ausgangskreis | | |
| 28 | Gleichrichterdiode | | |
| 29 | Pufferkapazität | | |
| 30 | Widerstand | | |

## Patentansprüche

1. Verfahren zum Entladen einer Entstörkapazität (7) am Ausgang einer Wechselrichtereinrichtung (1) für die Einspeisung elektrischer Energie von einer Stromquelle in ein Wechselstromnetz, bei der ein Netzteil (14) aus einer seitens des Wechselstromnetzes am Ausgang der Wechselrichtereinrichtung (1) anliegenden Spannung gespeist wird, **dadurch gekennzeichnet, dass** die über der Entstörkapazität (7) anliegende Spannung gleichgerichtet wird, um einen Gleichspannungszwischenkreis (13) des Netzteils (14) zu laden.

2. Verfahren nach Anspruch 1, **dadurch gekennzeichnet, dass** zum Gleichrichten der Spannung jede Seite der Entstörkapazität (7) über zwei Gleichrichterdioden (18) mit den beiden Leitungen (16, 17) des Gleichspannungszwischenkreises (13) verbunden wird.

3. Verfahren nach Anspruch 2, **dadurch gekennzeichnet, dass** zum Entladen aller Entstörkapazitäten (7, 8) am Ausgang der Wechselrichtereinrichtung (1) zu einem mehrphasigen Wechselstromnetz jede Phase (L1-L3) und der Nullleiter (N) über je zwei Gleichrichterdioden (18) mit den beiden Leitungen (16, 17) des Gleichspannungszwischenkreises (13) verbunden werden.

4. Verfahren nach Anspruch 2 oder 3, **dadurch gekennzeichnet, dass** zwei Paare von Gleichrichterdioden (18) zu einer Gleichrichtervollbrücke (12) zusammengefasst werden.

5. Verfahren nach einem der Ansprüche 1 bis 4, **dadurch gekennzeichnet, dass** der Gleichspannungszwischenkreis (13) über einen getakteten Schalter (25) entladen wird.

6. Wechselrichtereinrichtung (1) für die Einspeisung elektrischer Energie von einer Stromquelle in ein Wechselstromnetz mit mindestens einer Entstörkapazität (7) am Ausgang der Wechselrichtereinrichtung (1), mit einer Entladungseinrichtung für die Entstörkapazität (7) und mit einem Netzteil (14), das aus einer am Ausgang der Wechselrichtereinrichtung (1) anliegenden Spannung gespeist wird, **dadurch gekennzeichnet, dass** ein Gleichrichter vorgesehen ist, der die Spannung über der Entstörkapazität (7) gleichrichtet und einem Gleichspannungszwischenkreis (13) des Netzteils (14) zuführt.

7. Wechselrichtereinrichtung nach Anspruch 6, **dadurch gekennzeichnet, dass** der Gleichrichter jede Seite der Entstörkapazität (7) über zwei Gleichrichterdioden (18) mit den beiden Leitungen (16, 17) des Gleichspannungszwischenkreises (13) verbindet.

8. Wechselrichtereinrichtung nach Anspruch 7, **dadurch gekennzeichnet, dass** zum Entladen aller Entstörkapazitäten (7, 8) am Ausgang der Wechselrichtereinrichtung (1) zu einem mehrphasigen Wechselstromnetz jede Phase (L1-L3) und der Nullleiter (N) von dem Wechselrichter über je zwei Gleichrichterdioden (18) mit den Leitungen (16, 17) des Gleichspannungszwischenkreises (13) verbunden sind.

9. Wechselrichtereinrichtung nach Anspruch 7 oder 8, **dadurch gekennzeichnet, dass** je zwei Paare von Gleichrichterdioden (18) zu einer Gleichrichtervollbrücke (12) zusammengefasst sind.

10. Wechselrichtereinrichtung nach einem der Ansprüche 6 bis 9, **dadurch gekennzeichnet, dass** das Netzteil (14) ein Schaltnetzteil (31) ist.

11. Wechselrichtereinrichtung nach Anspruch 10, **dadurch gekennzeichnet, dass** das Schaltnetzteil (31) einen den Gleichspannungszwischenkreis (13) entladenden getakteten Schalter (25) aufweist.

12. Wechselrichtereinrichtung nach einem der Ansprüche 6 bis 11, **dadurch gekennzeichnet, dass** der Gleichspannungszwischenkreis (13) eine Pufferkapazität (19) aufweist.

13. Wechselrichtereinrichtung nach einem der Ansprüche 6 bis 12, **dadurch gekennzeichnet, dass** der Gleichspannungszwischenkreis (13) einen Restentladungswiderstand (20) aufweist.

14. Wechselrichtereinrichtung mit den Merkmalen der Ansprüche 12 und 13, **dadurch gekennzeichnet, dass** die Pufferkapazität (19) und der Restentladungswiderstand (20) symmetrisch geteilt sind und ihre Mittelpunkte (21, 22) miteinander verbunden sind.

15. Wechselrichtereinrichtung nach einem der Ansprüche 6 bis 14, **dadurch gekennzeichnet, dass** keiner Entstörkapazität (7, 8) am Ausgang der Wechselrichtereinrichtung (1) ein ohmscher Entladungswiderstand parallel geschaltet ist.
